Europäisches Patentamt

European Patent Office

Office européen des brevets

(19)

(11) Veröffentlichungsnummer: **0 092 231**
**B1**

(12) **EUROPÄISCHE PATENTSCHRIFT**

(45) Veröffentlichungstag der Patentschrift:
23.10.85

(51) Int. Cl.4: **H 01 S 3/097**

(21) Anmeldenummer: 83103776.7

(22) Anmeldetag: 19.04.83

(54) Anregungskreis für Lasersysteme, insbesondere für TE-Hochenergielaser, mit Einstellung der Vorionisierung.

(30) Priorität: 19.04.82 DE 3214333

(43) Veröffentlichungstag der Anmeldung:
26.10.83 Patentblatt 83/43

(45) Bekanntmachung des Hinweises auf die Patenterteilung:
23.10.85 Patentblatt 85/43

(84) Benannte Vertragsstaaten:
AT CH FR GB IT LI

(56) Entgegenhaltungen:
EP - A - 0 024 576
EP - A - 0 048 407
DE - A - 3 035 702
DE - A - 3 128 206

APPLIED PHYSICS LETTERS, Band 37, Nr. 10, 15. November 1980, Seiten 883-885, American Institute of Physics, New York, USA C. JIANWEN et al.: "Efficient operation of Blumlein-discharge-excited XeC1laser"
REVIEW OF SCIENTIFIC INSTRUMENTS, Band 47, Nr. 5, Mai 1976, Seiten 608-613, American Institute of Physics, New York, USA A. GIRARD: "Multiple preionization discharge TEA C02 laser"
JAPANESE JOURNAL OF APPLIED PHYSICS, Band 20, Nr. 1, Januar 1981, Seiten 129-137, Tokyo, JP. M. MAEDA et al.: "Electrical circuit design of fast-discharge system

(73) Patentinhaber: KRAFTWERK UNION AKTIENGESELLSCHAFT, Wiesenstrasse 35, D-4330 Mülheim (Ruhr) (DE)

(72) Erfinder: Cirkel, Hans-Jürgen, Dr., Anderlohrstrasse 9, D-8520 Erlangen (DE)
Erfinder: Müller, Reinhard, Vogelherd 97, D-8520 Erlangen (DE)
Erfinder: Müller-Horsche, Elmar, Moltkestrasse 2, D-8580 Bayreuth (DE)

(74) Vertreter: Mehl, Ernst, Dipl.-Ing. et al, Postfach 22 01 76, D-8000 München 22 (DE)

(56) Entgegenhaltungen: (Fortsetzung)
for high-power rare-gas halide lasers"
APPLIED PHYSICS LETTERS, Band 38, Nr. 1, 1. Januar 1981, Seiten 3-6, American Institute of Physics, New York, USA S. WATANABE et al.: "Spatially resolved gain measurements in UV preionized homogenous discharge XeC1 and KrF lasers"
APPLIED PHYSICS LETTERS, Band 37, Nr. 9, 1. November 1980, Seiten 771-773, New York, USA D.B. COHN: "C02 laser excited by preionized transverse discharge through a dielectric"

## Beschreibung

Die Erfindung bezieht sich auf einen Anregungskreis für Lasersysteme, insbesondere für TE(Transversal Excited)-Hochenergielaser, gemäß Oberbegriff des Anspruchs 1.

Ein solcher Anregungskreis ist z. B. in der älteren nationalen Anmeldung DE-A-3 128 206 vom 16. 7. 1981 in der Bundesrepublik Deutschland vorgeschlagen worden und — allerdings ohne Darstellung von Vorionisierungs-Einrichtungen — durch die EP-A-002 456 bekannt. Geeignete Vorionisierungs-Einrichtungen sind z. B. in der DE-A-3 035 702 mit Gleitentladungsstrecken vorgeschlagen worden und durch die EP-A-0 048 407 mit Vorionisierungs-Stäben bekannt. Für den Betrieb von TE-Laser- oder TE-Hochenergielaser-Systemen sind effektiv arbeitende Vorionisierungs-Einrichtungen nach den vorgenannten deutschen Offenlegungsschriften von besonderer Bedeutung. Der Einsatzzeitpunkt der Vorionisierung ist nämlich auf jedes Lasersystem, z. B. KrF, XeCl, XeF oder $CO_2$, abzustimmen, und aus Kostengründen sollte die Vorionisierung mit möglichst geringem Aufwand bei geringem Energiebedarf betrieben werden können.

Der Erfindung liegt die Aufgabe zugrunde, einen Anregungskreis für Lasersysteme mit der ihm zugeordneten Vorionisierungs-Einrichtung so auszubilden, daß er den vorerwähnten gestellten Anforderungen auf besonders effektive Weise Rechnung trägt, d. h., bei dem der Aufwand an Schaltungsmaßnahmen klein gehalten werden kann.

Erfindungsgemäß wird die gestellte Aufgabe bei einem Anregungskreis für Lasersysteme gemäß Gattungsbegriff durch die im Kennzeichen des Anspruchs 1 angegebenen Merkmale in der Hauptsache gelöst. Die Erfindung ist sowohl für Gleitfunkstrecken als Vorionisierungs-Einrichtungen geeignet, als auch für Vorionisierungs-Einrichtungen, die mit Zündelektroden arbeiten, welche mit einem geringen Überschlagabstand, insbesondere achsparallel zu den langgestreckten Laser-Elektroden, angeordnet, und zwar dabei insbesondere als sogenannte Vorionisierungs-Stäbe je einer der einander gegenüberliegenden Laser-Elektroden zugeordnet sind.

Vorteilhafte Weiterbildungen des Gegenstandes des Anspruchs 1 sind in den Unteransprüchen 2 bis 12 angegeben. Dabei befassen sich die Gegenstände der Ansprüche 2, 3, 11 und 12 speziell mit Hilfsschaltungen und ihren Anschlüssen bei Gleitfunkenstrecken, während die Gegenstände der Ansprüche 4, 7, 8, 9 und 10 Vorionisierungs-Stäbe und ihre Hilfsschaltungen betreffen. Die Gegenstände der Ansprüche 5 und 6 beziehen sich auf beide Arten der Vorionisierung.

Im folgenden wird anhand der Zeichnung, in der mehrere Ausführungsbeispiele der Erfindung dargestellt sind, diese noch näher erläutert. Darin zeigt in vereinfachten Schaltbildern

Fig. 1 die Hilfsschaltung einer Vorionisierungs-Einrichtung mit einer schematisch angedeuteten Gleitfunkenstrecke und einem Blümlein-Schaltkreis,

Fig. 2 ein Schaltbild für den Laser-Anregungskreis mit bei A, A* und A' sowie bei B anschließbarer Hilfsschaltung nach Fig. 1 und mit Pulsaufladung für das pulsformende Netzwerk, welchem eine Blümlein-Schaltung zugrunde liegt,

Fig. 3 eine vereinfachte Hilfsschaltung nach Fig. 1 ohne den dort dargestellten Kondensator $C_1$,

Fig. 4 das pulsformende Netzwerk für den Laser mit Pulsaufladung in einer Ausführung als Charge-Transfer-Schaltkreis, ebenfalls mit den Schaltungspunkten A, A* und A' sowie B,

Fig. 5 ein Anregungskreis mit Blümlein-Schaltkreis des pulsformenden Netzwerkes und Pulsaufladung sowie einer anderen Ausführung der Vorionisierungs-Einrichtung mit Vorionisierungsstäben,

Fig. 6 eine zu Fig. 5 gleichartige Vorionisierungs-Einrichtung, jedoch mit einem pulsformenden Netzwerk als Charge-Transfer-Schaltkreis,

Fig. 7 eine erste Ausführung für die grundsätzliche Vorionisierungs-Einrichtung nach Fig. 5 und Fig. 6, wobei die in den Fig. 5 und 6 gestrichelt eingerahmten Schaltungsteile näher ausgestaltet sind und der Anschluß der Hilfsschaltung an den Schaltungspunkten A' und B erfolgt,

Fig. 8 eine zweite Ausführung für die Vorionisierungs-Einrichtung mit Vorionisierungsstäben nach Fig. 5 und Fig. 6, in entsprechender Darstellung zu Fig. 7, wobei der hochspannungsseitige Anschluß der Hilfsschaltung an die Schaltungspunkte A oder A* über eine Vorimpedanz erfolgt,

Fig. 8a eine dritte Ausführung für die Vorionisierungs-Einrichtung mit Vorionisierungsstäben, die im Vergleich zu Fig. 7 und Fig. 8 stark vereinfacht ist, wobei der Anschluß ebenfalls an den Schaltungspunkten A oder A* und B erfolgt,

Fig. 9 eine vierte Ausführung für die Vorionisierungs-Einrichtung mit Vorionisierungsstäben, bei der die den beiden Laser-Elektroden zugeordneten Hilfsschaltungen als Blümlein-Schaltkreis ausgeführt und hochspannungsseitig an den Schaltungspunkten A oder A* über eine Vorimpedanz ebenso wie im Beispiel nach Fig. 8 angeschlossen sind,

Fig. 10 eine fünfte Ausführung für die Vorionisierungs-Einrichtung mit Vorionisierungsstäben, bei der der Anschluß der Hilfsschaltung an die Schaltungspunkte A' und B des Netzwerkes nach Fig. 5 oder Fig. 6 erfolgt,

Fig. 11 eine im Vergleich zu Fig. 10 weiter ausgestaltete Hilfsschaltung mit Blümlein-Schaltkreisen, bei der ebenso wie im Beispiel nach Fig. 10 der Anschluß an den Schaltungspunkten A' und B des Netzwerkes nach Fig. 5 oder Fig. 6 erfolgt,

Fig. 12 eine an die Hochspannung des Hauptkreises angeschlossene und dessen Hochspannungsschalter mitbenutzte Hilfsschaltung für eine Gleitfunkenstrecke, wobei der Haupt- bzw.

Anregungskreis in Blümlein-Schaltung ausgeführt ist,

Fig. 13 den Gegenstand nach Fig. 12, wobei die Hilfsschaltung für die Gleitfunkenstrecke durch Parallelschaltung einer Zusatzkapazität zu einer zweiten Blümlein-Schaltung ergänzt ist,

Fig. 14 den Gegenstand nach Fig. 12, wobei jedoch der Hauptkreis bzw. der Anregungskreis ein pulsformendes Netzwerk aufweist, welches eine Charge-Transfer-Schaltung bildet,

Fig. 15 den Gegenstand nach Fig. 14, bei dem die Hilfsschaltung für die Vorionisierungs-Einrichtung durch Parallelschalten einer Zusatzkapazität zu einer Blümlein-Schaltung ergänzt ist; und

Fig. 16 ein Diagramm, in welchem über der Zeitachse t die verschiedenen Zündeinsatzbereiche der Vorionisierungs-Einrichtungen aufgetragen sind.

Für den Betrieb von TE-Lasern ist eine effektive Vorionisierungsvorrichtung, wie sie z. B. in der DE-A-3 035 702 und EP-A-0 048 407 beschrieben wurde, von besonderer Bedeutung. Der Einsatzzeitpunkt der Vorionisierung ist auf jedes Lasersystem, z. B. KrF, XeCl, XeF oder $CO_2$, abzustimmen, und aus Kostengründen sollte die Vorionisierung mit möglichst geringem Aufwand bei geringem Energiebedarf betrieben werden können.

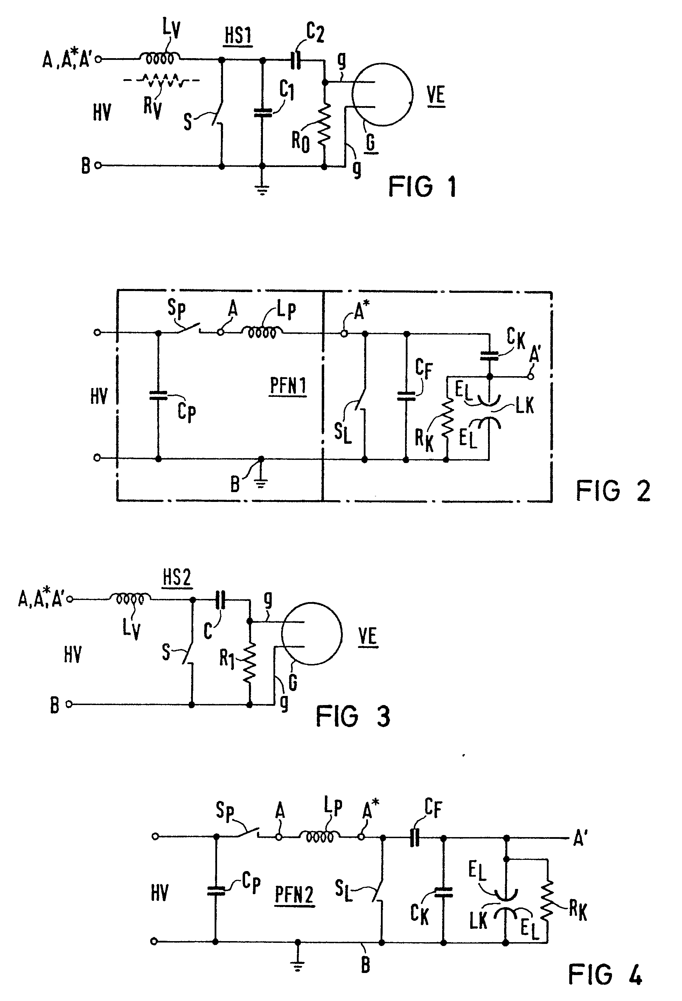

Fig. 1 zeigt die prinzipielle elektrische Verschaltung HS1 einer Vorionisierungs-Einrichtung VE, wie sie in der DE-A-3 035 702 beschrieben ist. $C_1$, $C_2$ sind Kondensatoren eines Blümlein-Schaltkreises, G ist die Gleitfunkenstrecke mit den beiden Polen g und S ein Schaltelement, z. B. eine Funkenstrecke. Die Schaltung ist über die Induktivität $L_V$ oder einen Widerstand $R_V$ (gestrichelt als Alternative dargestellt) an die Hochspannungsversorgung HV angeschlossen. Um Kosten zu sparen, soll die Spannungsversorgung des Laserkopfes mitbenutzt werden. $R_0$ ist eine hochohmige Impedanz, insbesondere ein Widerstand, der parallel zur Gleitfunkenstrecke G geschaltet ist. Hochohmig bedeutet hochohmig im Vergleich zum Widerstand der gezündeten Gleitfunkenstrecke G.

In Fig. 2 ist das Schaltbild eines TE-Lasers dargestellt, in dem als pulsformendes Netzwerk die Blümlein-Schaltung verwandt wird und eine Pulsaufladung der Kondensatoren durch die Hochspannung HV erfolgt, wie sie bei Verwendung von Wasser als Dielektrikum erforderlich wird. Die Laserelektroden der Laserkammer LK sind mit $E_L$ bezeichnet, die parallel zur Laser-Entladungsstrecke geschaltete hochohmige Impedanz, insbesondere ein Widerstand, mit $R_K$, die Bandleiter-Kondensatoren mit $C_F$, $C_K$; der Hochspannungsschalter mit $S_L$, die Erdpotentialschiene des pulsformenden Netzwerkes PFN1 mit B sowie die am Eingang des pulsformenden Netzwerkes PFN1 an dieses angeschlossenen Schaltkreiselemente der Pulsladekapazität, des Pulsschalters und der Längsinduktivität mit $C_P$, $S_P$ und $L_P$.

Zweckmäßigerweise läßt sich die Hochspannungsversorgung für die Vorionisierung an den Punkten A oder A* oder A' abgreifen, wobei A am hochspannungsseitigen Eingang von PFN1 zwischen $S_P$ und $L_P$ liegt, A* am hochliegenden Verzweigungspunkt zum Hochspannungsschalter $S_L$ und zum einen Bandleiterkondensator $C_F$ sowie A' unmittelbar an der Zuleitung der hochliegenden Laser-Elektrode $E_L$.

Wird der Punkt A als Anzapfpunkt für die Vorionisierung gewählt, so erfolgt die Aufladung der Kondensatoren $C_1$, $C_2$ in Fig. 1, während die Kondensatoren $C_F$ und $C_K$ (Fig. 2) aufgeladen werden. Der Aufladevorgang erfolgt dabei nach den allgemein bekannten Gesetzmäßigkeiten, so daß zu jedem Zeitpunkt $T_0+t$ nach Schließen des Schalters $S_P$ (Zeitpunkt $t_0$) ein Spannungswert U den Kondensatoren $C_1$, $C_2$ zuzuordnen ist.

Zum Zeitpunkt $T_0+\tau$ ist die maximale Ladespannung der Kondensatoren $C_F$ und $C_K$ erreicht, und durch Schließen des Schalters $S_L$ (Fig. 2) wird eine Spannung über den Elektroden $E_L$ der Laserkammer LK aufgebaut. Wird die Zündspannung des Schalters S erreicht, so bricht die Gleitfunkenstrecke G durch. Durch Variation der Zündspannung des Schalters S läßt sich somit der Vorionisierungszeitpunkt, der vor dem Schließen des Schalters $S_L$ liegt, variieren, dies gilt sinngemäß auch für den Anschluß von HS1 an A*, wobei gegenüber dem Anschluß an A eine kleine Verzögerung der Zündung von S eintritt.

Durch den Anschluß der Vorionisierungseinrichtung am Punkt A' (Fig. 2) erfolgt die Aufladung der Kondensatoren $C_1$, $C_2$ (Fig. 1) während die Spannung an die Laserelektroden angelegt wird. Die Gleitfunkenstrecke G (Fig. 1) bricht bei dieser Variante nach Zünden des Schalters $S_L$ durch, wobei der Zeitpunkt durch Einstellen der Zündspannung des Schalters S vorgegeben werden kann. Bei der Schaltungsvariante einer Hilfsschaltung HS2 nach Fig. 3 ist im Vergleich zu Fig. 1 die Kapazität $C_1$ weglassen; dabei entspricht C der Kapazität $C_2$ und $R_1$ der Impedanz $R_0$. Die Steuerung des Einsatzpunktes der Vorionisierung erfolgt bei dieser Hilfsschaltung HS2 entsprechend zur Hilfsschaltung HS1 nach Fig. 1.

Wird als pulsformendes Netzwerk für den Laserkreis eine Charge-Transfer-Schaltung PFN2, wie sie in Fig. 4 dargestellt ist, verwandt, so lassen sich die beschriebenen Maßnahmen zur Vorionisierungssteuerung sinngemäß anwenden. Gleiche Teile zu Fig. 2 tragen die gleichen Bezugszeichen.

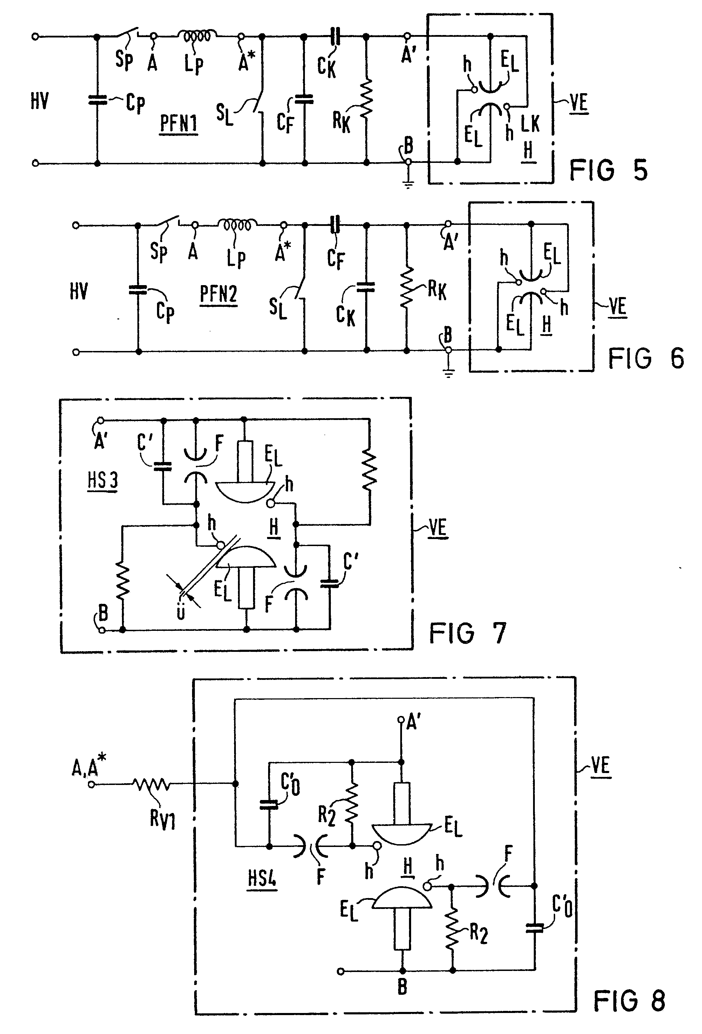

Auch für die Vorionisierungsanordnung, die in der EP-A-0 048 407 beschrieben wurde, werden im folgenden Möglichkeiten angegeben, den Einsatzzeitpunkt frei zu wählen und die Vorionisierung bei geringem Energieverbrauch zu verstärken. Fig. 5 zeigt das pulsformende Netzwerk PFN1 nach Fig. 2 und im übrigen den Schaltkreis für die Vorionisierung entsprechend der EP-A-0 048 407, wobei als PFN für den Laserkreis eine Blümlein-Schaltung eingesetzt und der Einfachheit halber nur je eine Hilfselektrode h der Vorionisierungs-Einrichtung VE, H gezeichnet ist, die einer Laserelektrode $E_L$ zugeordnet ist.

Fig. 6 zeigt dieselbe grundsätzliche Anordnung der Vorionisierungs-Einrichtung VE, H mit einem Charge-Transferkreis als pulsformendes Netzwerk PFN2 des Lasers, wobei gleiche Teile wieder gleiche Bezugzeichen tragen, vgl. auch Fig. 4.

Um die Maßnahmen zur Verbesserung der Vorionisierung zu erläutern, werden die Teile der Schaltungen in Fig. 5 und Fig. 6 betrachtet, die in dem gestrichelten Kasten gezeichnet sind. Die im folgenden beschriebenen Maßnahmen sind sowohl für den Blümlein- als auch für den Charge-Transfer-Kreis als pulsformendes Netzwerk PFN1 bzw. PFN2 für die Laseranregung anwendbar.

Fig. 7 zeigt anhand einer Hilfsschaltung HS3, die aus zwei, für jede Elektrode $E_L$ gleichartigen Hilfsschaltungshälften besteht eine Möglichkeit, die es erlaubt, den Zündzeitpunkt der Vorionisierung herauszuschieben. In die Zuleitungen der Innenleiter der Zündelektroden bzw. Vorionisierungsstäbe h werden jeweils kleine Funkenstrecken F, z. B. Überspannungsableiter, eingefügt, die durch kleine Kapazitäten C' überbrückt sein können. Vor Durchbrechen der Funkenstrecke F bleibt das Potential des Innenleiters aufgrund der kapazitiven Kopplungen der Innenleiter der Zündelektrode mit der benachbarten Elektrode $E_L$ (siehe Überschlagabstand ü) nahezu auf dem Potential der benachbarten Elektrode, so daß sich eine Potentialdifferenz an beiden Elektroden der Funkenstrecke F ausgebildet. Erst bei Durchbrechen der Funkenstrecke liegt die volle Potentialdifferenz zwischen Innenleiter der Zündelektrode h und der benachbarten Elektrode $E_L$ an. Durch Variation der Durchbruchspannung der Funkenstrecke F läßt sich der Zeitpunkt der Vorionisierung verschieben. Diese Hilfsschaltung HS3 wird direkt an den Schaltungspunkt A' angeschlossen, vgl. Fig. 5 und Fig. 6.

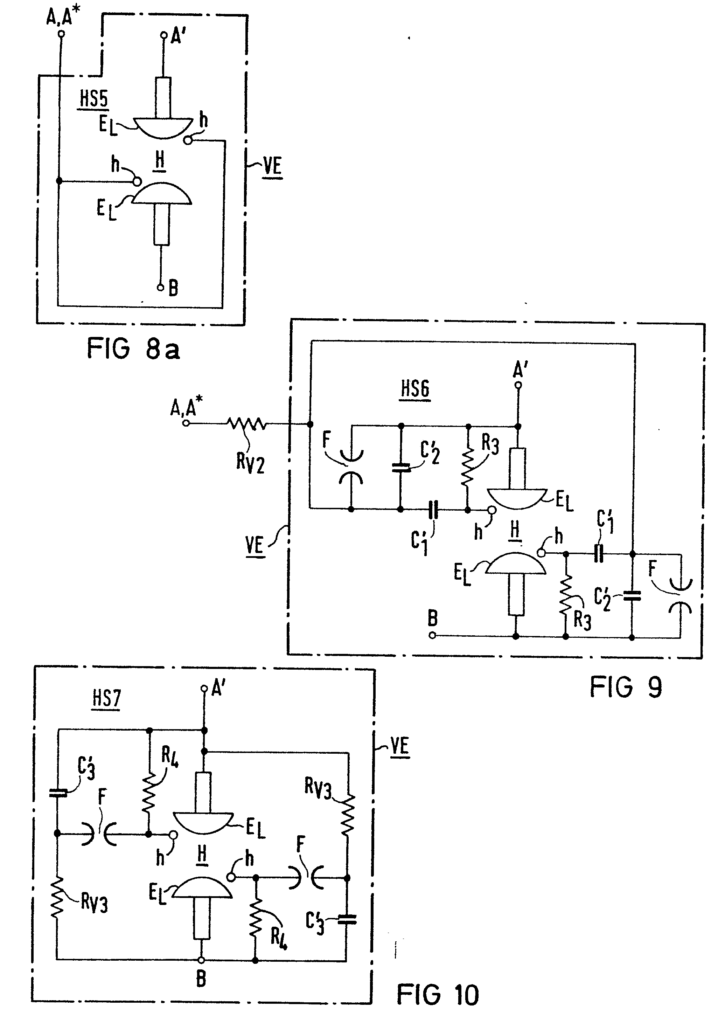

Fig. 8 beschreibt eine Hilfsschaltung HS4, die es erlaubt, vor Schließen des Schalters $S_L$ des pulsformenden Netzwerks PFN1 bzw. PFN2 vorzuionisieren. Über eine Impedanz $R_{V1}$, die als Kondensator, Induktivität oder ohmscher Widerstand ausgebildet ist, wird vom Punkt A* der Pulsaufladevorrichtung der Kondensator $C'_0$ geladen. Sobald die Zündspannung der Funkenstrecke F überschritten ist, liegt zwischen dem Innenleiter der Zündelektrode h und der benachbarten Elektrode $E_L$ eine hohe Potentialdifferenz, die die Vorionisierung bewirkt. Hierbei liegt parallel zur Entladungsstrecke h—$E_L$ die hochohmige Impedanz $R_2$, und zu dieser Parallelschaltung ist die Reihenschaltung aus $C'_0$ und F parallelgeschaltet, wobei die Zuleitung der Pulsspannung über $R_{V1}$ an der Verbindungsstelle zwischen $C'_0$ und F erfolgt. Statt A* kann auch A als Anschlußpunkt gewählt werden, falls der Zündimpuls für VE noch eher kommen soll. Die beiden Hälften der Hilfsschaltung HS4 entsprechenden im übrigen der Schaltung HS2. Eine Variation HS5 der Schaltung nach Fig. 8 besteht darin, den Innenleiter der Zündelektrode h direkt mit den Punkten A* oder A zu verbinden (Fig. 8a).

Fig. 9 zeigt eine Variante der Hilfsschaltung HS4 nach Fig. 8. Diese Hilfsschaltung HS6 erlaubt eine höhere Potentialdifferenz zwischen Innenleiter der Zündelektrode h und benachbarter Elektrode $E_L$ zu erzielen, wobei auch bei der Anordnung in Fig. 9 die Vorionisierung vor Schließen des Schalters $S_L$ erfolgt. Die Hilfsschaltungshälften sind als Blümlein-Schaltkreise ausgeführt; die den Schaltungselementen $R_0$, $C_1$, $C_2$ und S nach Fig. 1 entsprechenden Schaltungselemente sind mit $R_3$, $C'_2$, $C'_1$ und F bezeichnet.

Die in Fig. 10 dargestellte Hilfsschaltung HS7 erlaubt die Vorionisierung auf einen Zeitpunkt nach Schließen des Schalters $S_L$ einzustellen. Nach Schließen des Schalters $S_L$ wird über eine Impedanz $R_{V3}$ (Kapazität, Induktivität oder ohmscher Widerstand) die Kapazität $C'_3$ geladen bis die Funkenstrecke F durchbricht. Daraufhin liegt eine entsprechende Potentialdifferenz zwischen dem Innenleiter der Zündelektrode h und der benachbarten Elektrode $E_L$. Ein Vergleich mit Fig. 8 zeigt, daß bei der Hilfsschaltung HS7 die Schaltungselemente $R_4$, F, $C'_3$ und $R_{V3}$ den Schaltungselementen $R_2$, F, $C'_0$ und $R_{V1}$ nach Fig. 8 (HS4) entsprechen, wobei jedoch die die Vorschalt-Impedanz $R_{V3}$ enthaltenden Leitungen nicht an A oder A*, sondern an A' bzw. B gelegt sind.

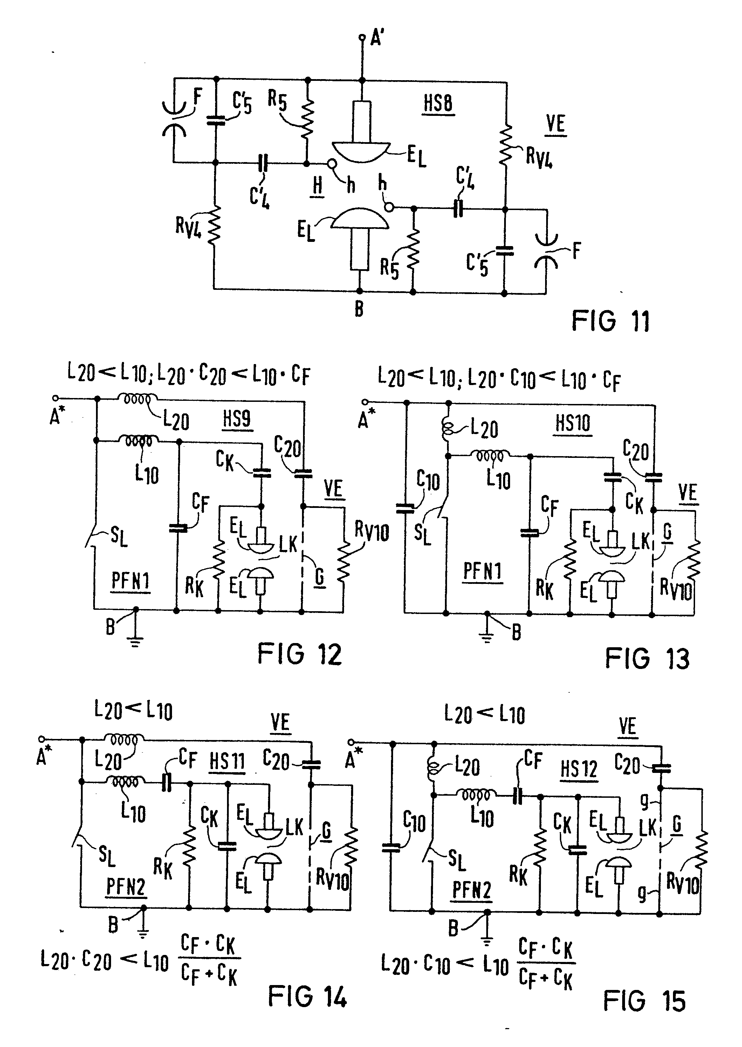

Eine im Vergleich zu HS7 höhere Spannung zu erzielen erlaubt die in Fig. 11 dargestellte Hilfsschaltung HS8.

In Fig. 11 liegt den Hilfsschaltungshälften der Vorionisierungs-Einrichtung VE, H wieder eine Blümlein-Schaltung zugrunde, wie sich durch einen Vergleich mit Fig. 9 ergibt. Dadurch läßt sich die Spannung, die zwischen der Zündelektrode H und der zugehörigen Laser-Elektrode $E_L$ jeweils aufbaut, praktisch verdoppeln. Die den Schaltungselementen $R_3$, $C'_1$, $C'_2$, F und $R_{V2}$ nach Fig. 9 entsprechenden Schaltungselemente sind in Fig. 11 mit $R_5$, $C'_4$, $C'_5$, F und $R_{V4}$ bezeichnet. Die Zweige mit $R_{V4}$ sind statt Anschlusses an A oder A* sinngemäß zu Fig. 10 an A' oder B angeschlossen.

Bei den Ausführungsbeispielen mit Gleitfunkenstrecke G nach den Fig. 12 bis 15 sind jeweils die L-, C-Werte $L_{20}$, $C_{20}$ des Hilfskreises, welcher zur Ankopplung der Gleitfunkenstrecke G an den Hauptkreis dient, klein bzw. sehr klein gegenüber den L-, C-Werten im Hauptentladungskreis des Lasers, d. h. gegenüber den C-Werten der Bandleiterkondensatoren $C_K$ und $C_F$ und gegenüber den L-Werten der Impedanz $R_K$ und gegenüber sonstigen im Hauptentladungskreis enthaltenen Induktivitäten, die sich insbesondere aus der Eigeninduktivität des Laserkopfes, der Zuleitungen und der Bandleiterkondensatoren ergeben und die durch die Ersatzinduktivität $L_{10}$ symbolisiert sind. Aufgrund der kleineren LC-Werte der Hilfsschaltung HS9 arbeitet die Vorionisierungs-Einrichtung nach Fig. 12 schneller als die Hauptentladung. Dies trifft auch zu für das Ausführungsbeispiel nach Fig. 13, bei der die Hilfsschaltung HS10 eine Blümlein-Schaltung ist. $R_{V10}$

ist eine parallel zur Gleitfunkenstrecke G, g geschaltete Impedanz bzw. ein Widerstand, der hochohmig im Vergleich zum Wiederstandswert der gezündeten Gleitfunkenstrecke G, g ist. Die Hilfsschaltung HS9 nach Fig. 12 ist ein in Reihe zur Gleitfunkenstrecke geschalteter Serienresonanzkreis, der an den Schaltungspunkt A* angeschlossen ist. In Fig. 13 ist die Hilfsschaltung HS9 zur Hilfsschaltung HS10, einer Blümlein-Schaltung, durch die Parallelkapazität $C_{10}$ ergänzt, wobei die Anschlußstelle der Hilfsschaltung bezüglich A* das innere Ende der Induktivität $L_{20}$ ist und ihr äußeres Ende an die Verzweigung $L_{10}$–$S_L$ angeschlossen ist.

Weitere Variationen zeigen Fig. 14, bei der dem Hauptentladungskreis eine Charge-Transfer-Schaltung zugrunde liegt. Die Hilfsschaltung HS11 nach Fig. 14, die derjenigen nach Fig. 12 entspricht, ist gemäß Fig. 15 zu einer Blümlein-Schaltung HS12 entsprechend der Fig. 13 ergänzt.

Man erkennt aus Fig. 12 bis 15, daß das Schaltelement $S_L$ der pulsformenden Netzwerke PFN1 (Blümlein-Schaltung) bzw. PFN2 (Charge-Transfer-Kreis) als Schaltelement der Vorionisierungs-Hilfsschaltungen HS9 bis HS12 mitbenutzt ist. Die zum zeitgerechten Zünden der Gleitfunkenstrecken G erforderlichen Bemessungen der Schaltungselemente $L_{20}$, $C_{20}$, $C_{10}$ der Hilfsschaltungen HS9 bis HS12 sind in Relation zu den Schaltungselementen $L_{10}$, $C_F$, $C_K$ des Hauptkreises durch Ungleichungen agegeben. Diese Hilfsschaltungen sind insbesondere für $CO_2$-Laser geeignet, bei denen ein nicht so schnelles Ansprechen der Vorionisierungs-Einrichtungen wie z. B. bei Excimer-Lasern erforderlich ist.

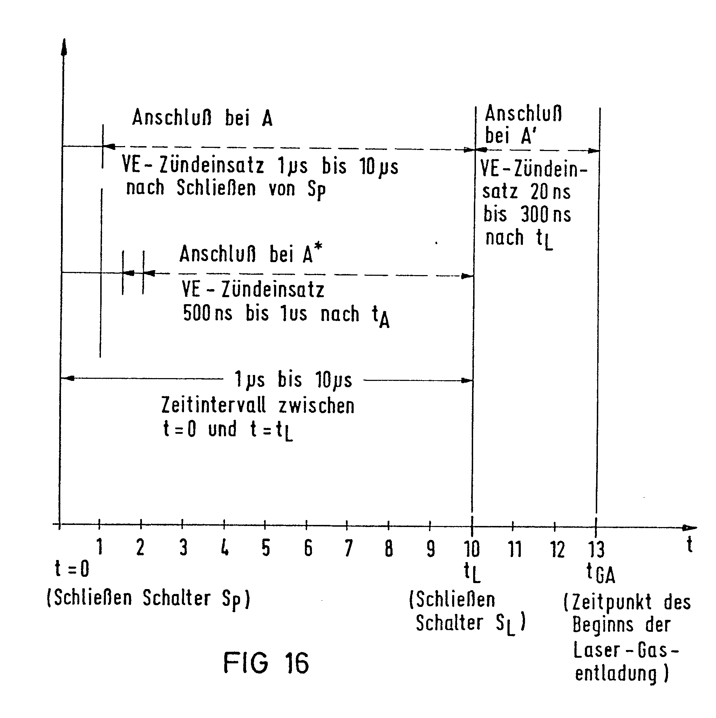

Fig. 16 zeigt noch ein Diagramm zur Illustration des möglichen Einsatzzeitpunktes der Zündung der Vorionisierungs-Einrichtungen VE in Abhängigkeit vom Anschluß ihrer Hilfsschaltungen an die Schaltungspunkte A, A* oder A'. Alles nähere geht aus den Erklärungen des Diagramms hervor. Als vorteilhaft hat es sich erwiesen, wenn die Vorionisierungsstäbe h aufweisenden Vorionisierungs-Einrichtungen VE, H, HS3 bis HS8 nach dem Prinzip der Koronaentladung arbeiten und hierzu aus einem stabförmigen, elektrisch leitenden Elektrodenkern und einem isolierenden dielektrischen Mantel bestehen.

## Patentansprüche

1. Anregungskreis für Lasersysteme, insbesondere für TE-Hochenergielaser, mit Anregung durch möglichst homogene lichtbogenfreie Kondensatorentladung im Gasraum eines Laserkopfes zwischen mindestens zwei, mit Abstand einander gegenüberliegenden Laser-Elektroden, bestehend aus

– dem Laserkopf (LK) mit den Laser-Elektroden (EL), welche jeweils parallel zur optischen Achse des Laserkopfes sich erstrecken und bevorzugt einen in dieser Richtung ausgedehnten Vollquerschnitt aufweisen;
– mindestens einem schnellen Hochspannungsschalter ($S_L$) durch dessen Aktivierung bzw. Zündung über ein angeschlossenes pulsformendes Netzwerk (PFN) die Hochspannungsimpulse an den Laser-Elektroden erzeugbar sind;
– dem genannten, insbesondere als Blümlein- (PFN1) oder Charge-Transfer-Schaltkreis (PFN2) aufgebauten, pulsformenden Netzwerk mit dem Hochspannungsschalter und dem Laserkopf zugeordneten ersten und zweiten Bandleiterkondensatoren ($C_F$, $C_K$) sowie zugehörigen Ersatz-Induktivitäten ($L_p$, $L_{10}$)
– und einer den Laser-Elektroden zugeordneten Vorionisierungs-Einrichtung (VE) mit einer innerhalb des Gasraumes des Laserkopfes angeordneten Gleitfunkenstrecke (g, G) oder mit Vorionisierungsstäben (h, H) und einer an der Vorionisierungs-Einrichtung angeschlossenen Hilfsschaltung (HS),

dadurch gekennzeichnet,

– daß alle Hilfsspannungen und -ströme zum Betrieb der Vorionisierungs-Einrichtung (VE) durch Anschluß ihrer Hilfsschaltung (HS1 bis HS12) an das pulsformende Netzwerk (PFN) des Lasersystems gewonnen werden und
– daß zur Steuerung des Einsatzzeitpunktes der Laser-Gasentladung die Zeitrelation zwischen dem Anlegen des Hochspannungsimpulses an die Laserelektroden ($E_L$) einerseits und dem Anlegen des Zündimpulses an die Pole (g, h) der Vorionisierungs-Einrichtung (VE) andererseits die Hilfsschaltung (HS1 bis HS12) außer an das Massepotential (B) des Anregungskreises anschließbar ist an mindestens einen von drei diskreten Schaltungspunkten (A, A*, A'), wovon
der erste Schaltungspunkt (A) am hochspannungsseitigen Eingang des pulsformenden Netzwerkes (PFN),
der zweite Schaltungspunkt (A*) am hochliegenden Verzweigungspunkt des Hochspannungsschalters ($S_L$) und des einen Bandleiterkondensators ($C_F$) und
der dritte Schaltungspunkt (A') unmittelbar an der Zuleitung der hochliegenden Laserelektrode ($E_L$) liegt.

2. Anregungskreis nach Anspruch 1, mit einer eine Gleitfunkenstrecke aufweisenden Vorionisierungs-Einrichtung, dadurch gekennzeichnet, daß die Hilfsschaltung (HS1, HS2; HS9 bis HS12) der Vorionisierungs-Einrichtung (VE) mit schnellen Hochspannungsschaltern (S, $S_L$) zusammenarbeiten, wobei in Reihe zur Parallelschaltung aus einer Gleitfunkenstrecke (G) und einer hochohmigen Impedanz ($R_0$, $R_1$, $R_{V10}$) zumindest eine Ladekapazität ($C_2$, C; $C_{20}$) und eine weitere Impedanz, insbesondere eine weitere Induktivität ($L_V$, $L_{20}$), geschaltet ist und wobei die Ladekapazitäten (C₂, C, C₂₀) und die weiteren Induktivitäten (L$_V$, L₂₀) der Hilfsschaltung klein gegenüber den entsprechenden Kapazitäten der Bandleiterkondensatoren (C$_F$, C$_K$) und Ersatzinduktivitäten (L$_P$, L₁₀) des pulsformenden Netzwerkes (PFN1, PFN2) sind.

3. Anregungskreis nach Anspruch 2, dadurch gekennzeichnet, daß die Hilfsschaltung (HS1, HS2) der Gleitfunkenstrecke (G) mit ihrem eigenen schnellen Hochspannungsschalter (S) versehen ist und dieser Hochspannungsschalter (S) mit seinem Hochspannungsanschluß zwischen die in Reihe geschaltete weitere Induktivität (L$_V$) und eine der Ladekapazitäten (C₂ bw. C) der Hilfsschaltung angeschlossen ist.

4. Anregungskreis nach Anspruch 1, mit einer Vorionisierungs-Stäbe aufweisenden Vorionisierungs-Einrichtung, dadurch gekennzeichnet, daß

a) die Vorionisierungsstäbe (h) der Vorionisierungs-Einrichtung (H) jeweils mit Überschlagabstand (ü) zu der zugehörigen Laser-Elektrode (E$_L$) angeordnet sind, daß

b) die Hilfsschaltung (HS3, HS4, HS6 bis HS8) die Impulsdurchschaltung zu jeweils einem Vorionisierungsstab (h) steuernde Schaltelemente (F) mit einstellbarem Zündzeitpunkt bzw. einstellbarer Durchbruchspannung umfaßt und daß

c) der Zündzeitpunkt der Schaltelemente (F) ferner steuerbar ist durch Anschluß der Hochspannungsversorgung der Hilfsschaltung (HS3, HS4, HS6 bis HS8) außer an das Massepotential (B) des pulsformenden Netzwerkes (PFN1, PFN2) an mindestens den Schaltungspunkt (A'), welcher unmittelbar an der Zuleitung der hochliegenden Laser-Elektrode (E$_L$) liegt (Fig. 5 bis 8, Fig. 9 bis 11).

5. Anregungskreis nach einem der Ansprüche 1 bis 4, mit einem flüssigen Dielektrikum, insbesondere chemisch reinem Wasser, für die Bandleiterkondensatoren, dadurch gekennzeichnet, daß das pulsformende Netzwerk (PFN1, PFN2) mit Pulsaufladung seiner Bandleiterkondensatoren (C$_F$, C$_K$) arbeitet und hierzu das pulsformende Netzwerk eingangsseitig über eine Pulsinduktivität (L$_p$) und einen Pulsschalter (S$_p$) an eine Pulsladekapazität (C$_p$) angeschlossen ist.

6. Anregungskreis nach einem der Ansprüche 1 bis 5, dadurch gekennzeichnet, daß die Hilfsschaltung (HS1, HS6, HS8, HS10, HS12) der Vorionisierungs-Einrichtung (VE) ein Blümlein-Schaltkreis mit einem schnellen Hochspannungsschalter (S bzw. F bzw. S$_L$) ist (Fig. 1, Fig. 9, Fig. 11, Fig. 13, Fig. 15) ist.

7. Anregungskreis nach Anspruch 4, dadurch gekennzeichnet, daß jeweils das Schaltelement eines an einen Vorionisierungsstab (h) angeschlossenen Hilfsschaltungsteils (HS3, HS4, HS6, HS7 und HS8) eine kleine Funkenstrecke (F), insbesondere ein Überspannungsableiter, ist, der vorzugsweise durch eine kleine Kapazität (C', C'₀, C'₂, C'₃ und C'₅) überbrückt ist (Fig. 7, Fig. 8, Fig. 9, Fig. 10, Fig. 11).

8. Anregungskreis nach Anspruch 4 oder einem der Ansprüche 5 bis 7, soweit diese auf Anspruch 4 rückbezogen sind, dadurch gekennzeichnet, daß die Hilfsschaltung (HS4, HS6) der Vorionisierungs-Einrichtung (VE) an den Schaltungspunkt (A*) des hochspannungsseitigen Eingangs des pulsformenden Netzwerkes über eine R-, L- oder C-Impedanz (R$_{V1}$ bzw. R$_{V2}$) angeschlossen ist (Fig. 8, Fig. 9).

9. Anregungskreis nach Anspruch 4 oder Anspruch 5, soweit dieser auf Anspruch 4 rückbezogen ist, dadurch gekennzeichnet, daß der Innenleiter der Vorionisierungsstäbe (h) direkt mit dem Schaltungspunkt (A*) des hochspannungsseitigen Eingangs des pulsformenden Netzwerks (PFN1, PFN2) verbunden ist (Fig. 8a).

10. Anregungskreis nach Anspruch 4, dadurch gekennzeichnet, daß die Vorionisierungsstäbe (h) der Vorionisierungs-Einrichtung (VE; H, HS3 bis HS8) nach dem Prinzip der Korona-Entladung arbeiten und hierzu aus einem stabförmigen, elektrisch leitenden Elektrodenkern und einem isolierenden dielektrischen Mantel bestehen.

11. Anregungskreis nach Anspruch 1 oder 2, mit Gleitfunkenstrecken aufweisenden Vorionisierungs-Einrichtungen, dadurch gekennzeichnet, daß der Hilfsschaltung (HS9, HS11) einer Gleitfunkenstrecke (G) der schnelle Hochspannungsschalter (S$_L$) mit dem pulsformenden Netzwerk (PFN1, PFN2) des Hauptentladungskreises gemeinsam ist und daß der Anschluß der Hilfsschaltung (HS9 bis HS12) an dem selben hochliegenden Schaltungspunkt (A*) wie auch der des pulsformenden Netzwerkes (PFN1, PFN2) erfolgt.

12. Anregungskreis nach Anspruch 1 oder 2, wobei die Hilfsschaltung eine Blümlein-Schaltung ist, dadurch gekennzeichnet, daß der Hilfsschaltung einer Gleitfunkenstrecke der schnelle Hochspannungsschalter der schnelle Hochspannungsschalter mit dem pulsformenden Netzwerk des Hauptentladungskreises gemeinsam ist, daß der Anschluß dieser Hilfsschaltung (HS10, HS12) an den hochliegenden Schaltungspunkt (A*) am Verzweigungspunkt der Parallelkapazität (C₁₀), der Induktivität (L₂₀) und der Kapazität (C₂₀) der Hilfs-Blümleinschaltung und der Anschluß dieser Hilfsschaltung an das pulsformende Netzwerk (PFN1, PFN2) mit dem vom Schaltungspunkt abgewandten Ende der Induktivität (L₂₀) der Hilfsblümleinschaltung an den Verzweigungspunkt (S$_L$—L₁₀) des Hochspannungsschalters erfolgt.

**Claims**

1. An excitation circuit for laser systems, in particular for high-energy TE lasers, with excitation by possibly homogenous arc-free capacitor discharge between at least two laser electrodes which are arranged opposite one another at a distance in the gas chamber of a laser head, comprising:

— the laser head (LK) with laser electrodes (E1) which respectively extend parallel to the optical axis of the laser head and preferably possess a solid section extended in this direction;

— at least one rapid high-voltage switch ($S_L$), by whose activation or ignition the high-voltage pulses at the laser electrodes can be formed by means of a connected pulse-forming network (PFN);

— said pulse-forming network is constructed in particular as a Blümlein ($PFN_1$) or charge-transfer switching circuit ($PFN_2$), and has first and second strip conductor capacitors (CF, CK) assigned to the high-voltage switch and the laser head, and has assigned equivalent inductances ($L_p$, $L_{10}$);

— and a pre-ionizing device (VE) assigned to the laser electrodes, arranged within the gas chamber of the laser head having a creepage spark gap (g, G) or having pre-ionizing rods (h, H) and an auxiliary circuit (HS) connected to the pre-ionizing device,

characterised in that

all auxiliary voltages and currents for the operation of the pre-ionizing device (VE) are obtained by connection of their auxiliary circuits (HS1 to HS12) to the pulse-forming network (PFN) of the laser system; and for the starting moment of the laser gas discharge to be controlled by the time relation between the connection of the high-voltage pulse to the laser electrodes ($E_L$) on the one hand and the connection of the ignition pulse to the poles (g, h) of the pre-ionizing device (VE) on the other hand, the auxiliary circuit (HS1 to HS12) can be connected to at least one of three discrete switching points (A, A*, A') in addition to the earth potential (B) of the activation circuit; the first switching point (A) being arranged at the high-voltage end input of the pulse-forming network (PFN); the second switching point (A*) being arranged at the high branch point of the high-voltage switch ($S_L$) and of the one strip conductor capacitor ($C_F$); and the third switching point (A') being directly arranged at the supply line of the high laser electrode ($E_L$).

2. An excitation circuit as claimed in claim 1, with a pre-ionizing device having a creepage spark gap, characterised in that the auxiliary circuits (HS1, HS2; HS9 to HS12) of the pre-ionizing device (VE) cooperate with rapid high-voltage switches (S, $S_L$), where at least one charge capacitance ($C_2$, C; $C_{20}$) and one further impedance, in particular one further inductance ($L_V$, $L_{20}$), is connected in series to the parallel circuit which consists of a creepage spark gap (G) and a high-ohmic impedance ($R_0$, $R_1$, $R_{V10}$), and where the charge capacitances ($C_2$, C, $C_{20}$) and the further

inductances ($L_V$, $L_{20}$) of the auxiliary circuit are small in relation to the corresponding capacitances of the strip conductor capacitors ($C_F$, $C_K$) and equivalent inductances ($L_P$, $L_{10}$) of the pulse-forming network (PFN1, PFN2).

3. An excitation circuit as claimed in claim 2, characterised in that the auxiliary circuit (HS1, HS2) of the creepage spark gap (G) is provided with its own rapid high-voltage switch (S), and the high-voltage switch (S) has its high-voltage terminal connected between the series-connected further inductance ($L_V$) and one of the charge capacitances ($C_2$ or C) of the auxiliary circuit.

4. An excitation circuit as claimed in claim 1, with a pre-ionizing device having pre-ionizing rods, characterised in that

a) the pre-ionizing rods (h) of the pre-ionizing device (H) are respectively arranged with respect to the assigned laser electrode ($E_L$) at a sparkover distance (ü);

b) the auxiliary circuit (HS3, HS4, HS6 to HS8) comprises switching elements (F) which respectively control the pulse through-connection to a pre-ionizing rod (h) and have an adjustable ignition time or adjustable breakdown voltage, as the case may be; and

c) the ignition time of the switching elements (F) is further controllable by the connection of the high-voltage supply of the auxiliary circuit (HS3, HS4, HS6 to HS8) to at least the switching point (A'), which lies directly at the supply line of the high laser electrode ($E_L$), in addition to the earth potential (B) of the pulse-forming network (PFN1, PFN2), (Fig. 5 to 8, Fig. 9 to 11).

5. An excitation circuit as claimed in one of claims 1 to 4, with a liquid dielectric, in particular chemically pure water, for the strip conductor capacitors, characterised in that the pulse-forming network (PFN1, PFN2) operates with pulse charge of its strip conductor capacitors ($C_F$, $C_K$), and for this purpose the pulse-forming network is connected to a pulse-charging capacitance ($C_P$) at the input end by means of a pulse inductance ($L_P$) and a pulse switch ($S_P$).

6. An excitation circuit as claimed in one of claims 1 to 5, characterised in that the auxiliary circuit (HS1, HS6, HS8, HS10, HS12) of the pre-ionizing device (VE) is a Blümlein circuit with a rapid high-voltage switch (S and F and $S_L$), (Fig. 1, Fig. 9, Fig. 11, Fig. 13, Fig. 15).

7. An excitation circuit as claimed in Claim 4, characterised in that the switching element of an auxiliary circuit component (HS3, HS4, HS6, HS7 and HS8), which is connected to a preionizing rod (h), is a small spark gap (F), in particular a surge arrester, preferably bridged by a small capacitance (C', $C'_0$, $C'_2$, $C'_3$ and $C'_5$), (Fig. 7, Fig. 8, Fig. 9, Fig. 10, Fig. 11).

8. An excitation circuit as claimed in claim 4 or in one of claims 5 to 7 when dependant upon claim 4, characterised in that the auxiliary circuit (HS4, HS6) of the pre-ionizing device (VE) is connected to the switching point (A*) of the high-voltage end input of the pulse-forming network by means of an R-, L- or C-impedance ($R_{V1}$ or $R_{V2}$ as the case may be), (Fig. 8, Fig. 9).

9. An excitation circuit as claimed in claim 4 or claim 5 when dependant upon claim 4, characterised in that the inner conductor of the pre-ionizing rods (h) is directly connected to the switching point (A*) of the high-voltage end input of the pulseforming network (PFN1, PFN2), (Fig. 8a).

10. An excitation circuit as claimed in claim 4, characterised in that the pre-ionizing rods (h) of the pre-ionizing device (VE; H, HS3 to HS8) operate in accordance with the corona discharge principle and for this purpose consist of a rod-shaped, electrically conductive electrode core and an insulating dielectric material.

11. An Excitation circuit as claimed in claim 1 or 2, with pre-ionizing devices having creepage spark gaps, characterised in that the rapid high-voltage switch ($S_L$) with the pulse-forming network (PFN1, PFN2) of the main discharge circuit is common to the auxiliary circuits (HS9, HS11) of a creepage spark gap (G), and that the connection of the auxiliary circuit (HS9 to HS12) is effected at the same high switching point (A*) as that of the pulse-forming network (PFN1, PFN2).

12. An excitation circuit as claimed in claim 1 or 2, wherein the auxiliary circuit is a Blümlein circuit, characterised in that the rapid high-voltage switch with the pulse-forming network of the main discharge circuit is common to the auxiliary circuit of a creepage spark gap, and that the connection of the auxiliary circuit (HS10, HS12) to the high switching point (A*) is effected at the branch point of the parallel capacitance ($C_{10}$), the inductance ($L_{20}$) and the capacitance ($C_{20}$) of the auxiliary Blümlein circuit, the connection of the auxiliary circuit to the pulse-forming network (PFN1, PFN2) being effected at the branch point ($S_L - L_{10}$) of the high-voltage switch by means of the end of the inductance ($L_{20}$) of the auxiliary Blümlein circuit remote from the switching point.

## Revendications

1. Circuit d'excitation pour des dispositifs laser, notamment pour un laser à haute énergie du type TE, dans lequel l'excitation est réalisée par l'intermédiaire d'une décharge de condensateur exempte d'arc électrique et aussi homogène que possible dans l'espace du gaz d'une tête de laser comportant au moins deux électrodes de laser disposées en vis-à-vis l'une de l'autre et qui est constituée par:

— la tête (LK) du laser munie des électrodes (EL) du laser, qui s'étendent parallèlement à l'axe optique de la tête du laser et possèdent de préférence une section transversale complète étendue dans cette direction;

— au moins un interrupteur à haute tension ($S_L$) à action rapide, au moyen de l'activation ou de l'amorçage duquel les impulsions de haute tension peuvent être produites au niveau des électrodes du laser par l'intermédiaire d'un réseau raccordé (PFN) de formation d'impulsions;

— ledit réseau de formation d'impulsions, constitué notamment sous la forme d'un circuit de Blümlein ($PFN_1$) ou par un circuit à transfert de charges ($PFN_2$) et comportant des premier et second condensateurs à conducteurs plats ($C_F$, $C_K$) associés à l'interrupteur à haute tension et à la tête du laser, ainsi que des inductances de réserve associées ($L_p$, $L_{10}$),

— et un dispositif de pré-ionisation (VE) associé aux électrodes du laser et comportant un éclateur à étincelles glissantes (g, G) disposé à l'intérieur du gaz de la tête de laser, ou un circuit auxiliaire (HS) raccordé à des barres de pré-ionisation (h, H) et un dispositif de pré-ionisation,

caractérisé par le fait

— que toutes les tensions et courants auxiliaires servant à faire fonctionner le dispositif de pré-ionisation (VE) sont obtenus au moyen du raccordement de leur circuit auxiliaire (HS1 à HS12) au réseau (PFN) de formation d'impulsions du dispositif laser, et

— que pour la commande de l'instant de déclenchement de la décharge dans le gaz du laser, la relation temporelle entre l'application de l'impulsion à haute tension aux électrodes ($E_L$) du laser d'une part et l'application de l'impulsion d'amorçage aux pôles (g, h) du dispositif de pré-ionisation (VE) d'autre part, le circuit auxiliaire (HS1 à HS12) peut être raccordé outre au potentiel de masse (B) du circuit d'excitation, à au moins l'un de trois points discrets du circuit (A, A*, A'), dont
le premier point (A) du circuit est situé à l'entrée, côté haute tension, du réseau (PFN) de formation d'impulsions,
le second point (A*) du circuit est situé au niveau du point de dérivation, situé à un niveau élevé, de l'interrupteur à haute tension ($S_L$) et d'un condensateur ($C_F$) à conducteur plat, et
le troisième point (A') du circuit est situé directement au niveau de la ligne d'alimentation de l'électrode ($E_L$) du laser, située à un niveau élevé.

2. Circuit d'excitation suivant la revendication 1, comportant un dispositif de pré-ionisation possédant un éclateur à étincelles glissantes, caractérisé par le fait que le circuit auxiliaire (HS1, HS2; HS9 à HS12) du dispositif de pré-ionisation (VE) opère avec des interrupteurs à haute tension (S, $S_L$) à action rapide, qu'en série avec le circuit parallèle formé par un éclateur à étincelle glissante (G) et d'une impédance de forte valeur ohmique ($R_0$, $R_1$, $R_{V10}$), se trouvent branchées au moins une capacité de charge ($C_2$, C; $C_{20}$) et une autre impédance, notamment une autre inductance ($L_V$, $L_{20}$), et que les capacités de charge ($C_2$, C; $C_{20}$) et les autres inductances ($L_V$, $L_{20}$) du circuit auxiliaire sont faibles par rapport aux capacités correspondantes des condensateurs à conducteurs plats ($C_F$, $C_K$) et aux inductances équivalentes ($L_p$, $L_{10}$) du réseau (PFN1, PFN2) de formation d'impulsions.

3. Circuit d'excitation selon la revendication 2, caractérisé par le fait que le circuit auxiliaire (HS1, HS2) de l'éclateur à étincelle glissante (G) est muni de son propre interrupteur à haute tension (S) à action rapide, et que cet interrupteur à haute tension (S) est raccordé par sa borne à haute tension entre l'autre inductance ($L_V$) branchée en série et l'un des condensateurs de charge ($C_2$ ou C) du circuit auxiliaire.

4. Circuit d'excitation selon la revendication 1, comportant un dispositif de pré-ionisation possédant des barres de pré-ionisation, caractérisé par le fait que

a) les barres de pré-ionisation (h) du dispositif de pré-ionisation (H) sont disposées respectivement à une distance de décharge disruptive (ü) par rapport à l'électrode associée ($E_L$) du laser,

b) que le circuit auxiliaire (HS3, HS4, HS6 à HS8) comprend des éléments de commutation (F) commandant le transfert direct des impulsions respectivement à une barre de pré-ionisation (h) et possédant un instant d'amorçage réglable et une tension de claquage réglable, et

c) que l'instant d'amorçage des éléments de commutation (F) peut en outre être commandé par le raccordement de l'alimentation à haute tension du circuit auxiliaire (HS3, HS4, HS6 à HS8) non seulement au potentiel de masse (B) du réseau (PFN1, PFN2) de formation d'impulsions, mais également au moins au poit (A') du circuit, qui est situé directement dans la ligne d'alimentation de l'électrode ($E_L$) du laser, située à un niveau élevé (figures 5 à 8, figures 9 à 11).

5. Circuit d'excitation suivant l'une des revendications 1 à 4, comportant un diélectrique liquide, notamment de l'eau chimiquement pure, pour les condensateurs à conducteurs plats, caractérisé par le fait que le réseau (PFN1, PFN2) de formation d'impulsions opère avec une charge impulsionnelle appliquée à ses condensateurs à conducteurs plats ($C_L$, $C_K$) et qu'à cet effet le réseau de formation d'impulsions est raccordé, du côté entre, par l'intermédiaire d'une inductance ($L_p$) de transmission d'impulsions et d'un commutateur d'impulsions ($S_p$) à un condensateur ($C_p$) de charge impulsionnelle.

6. Circuit d'excitation suivat l'une des revendications 1 à 5, caractérisé par le fait que le circuit auxiliaire (HS1, HS6, HS8, HS10, HS12) du dispositif de pré-ionisation (VE) est un circuit de Blümlein possédant un interrupteur à haute tension (S ou F ou $S_1$) rapide (figure 1, figure 9, figure 11, figure 13, figure 15).

7. Circuit d'excitation suivant la revendication 4, caractérisé par le fait que respectivement l'élément de commutation d'un dispositif auxiliaire (HS3, HS4, HS6, HS7 et HS8) raccordé à un barreau de pré-ionisation (h) est un petit éclateur à étincelles (F), notamment un dispositif de dérivation des surtensions, qui est shunté de préférerce par une faible capacité ($C'$, $C'_0$, $C'_2$, $C'_3$ et $C'_5$) (figure 7, figure 8, figure 9, figure 10, figure 11).

8. Circuit d'excitation suivant la revendication 4 ou l'une des revendications 5 à 7, dans la mesure où cette revedication est rattachée à la revendication 4, caractérisé par le fait que le circuit auxiliaire (HS4, HS6) du dispositif de pré-ionisation (VE) est raccordé au point (A*) du circuit de l'entrée, côté haute tension, du réseau de formation d'impulsions, par l'intermédiaire d'une impédance (R, L ou C) ($T_{V1}$ ou $R_{V2}$) (figure 8, figure 9).

9. Circuit d'excitation suivant la revendication 4 ou la revendication 5, dans la mesure où cette revendication est rattachée à la revendication 4, caractérisé par le fait que le conducteur intérieur des barres de pré-ionisation (h) est raccordé directement au point (A*) du circuit de l'enntrée, côté haute tension, du réseau (PFN1, PFN2) de formation d'impulsions (figure 8a).

10. Circuit d'excitation suivant la revendication 4, caractérisé par le fait que les barres de pré-ionisation (h) du dispositif de pré-ionisation (VE; H, HS3 à HS8) opèrent selon le principe de la décharge par effet couronne et sont constitués, à cet effet, par un noyau d'électrode électriquement conducteur en forme de barre et par une envelope diélectrique isolante.

11. Circuit d'excitation suivant la revendication 1 ou 2, comportant des dispositifs de pré-ionisation possédant des éclateurs à étincelle glissante, caractérisé par le fait que l'interrupteur à haute tension ($H_L$) à action rapide est commun au circuit auxiliaire (HS9, HS11) d'un éclateur à étincelle glissante (G) et au réseau (PFN1, PFN2) de formation d'impulsions, du circuit de décharge principal et que le circuit auxiliaire (HS9 à HS12) et le réseau (PFN1, PFN2) de formation d'impulsions sont raccordés au même point (A*) du circuit, situé à un niveau élévé.

12. Circuit d'excitation suivant la revendication 1 ou 2, dans lequel le circuit auxiliaire est un circuit de Blümlein, caractérisé par le fait que l'interrupteur à haute tension à action rapide est prévu en commun pour le circuit auxiliaire d'un éclateur à étincelle glissante et du réseau, formant des impulsions, du circuit de décharge principal, que ce circuit auxiliaire (HS10, HS12) est raccordé au point (A*) du circuit, situé à un niveau élévé, à l'emplacement du point de dérivation du condensateur parallèle ($C_{10}$), de l'inductance ($L_{20}$) et du condensateur ($C_{20}$) du circuit de Blümlein auxiliaire, et que ce circuit auxiliaire est raccordé au réseau (PFN1, PFN2) de formation d'impulsions par l'extrémité, située à l'opposé dudit point de circuit, de l'inductance ($L_{20}$) du circuit de Blümlein auxiliaire, au point de dérivation ($S_L - L_{10}$) de l'interrupteur à haute tension.

FIG 1

FIG 2

FIG 3

FIG 4

FIG 5

FIG 6

FIG 7

FIG 8

FIG 8a

FIG 9

FIG 10

A'

F  C'₅  R₅  HS8  VE

E_L  Rᵥ₄

C'₄  H  h  h  C'₄

Rᵥ₄  E_L  R₅  C'₅  F

B

FIG 11

$L_{20} < L_{10}; L_{20} \cdot C_{20} < L_{10} \cdot C_F$

A*  L₂₀  HS9  C₂₀

L₁₀  C_K  VE

C_F  E_L  LK  Rᵥ₁₀

S_L  R_K  E_L  G

PFN1

B

FIG 12

$L_{20} < L_{10}; L_{20} \cdot C_{10} < L_{10} \cdot C_F$

A*  L₂₀  HS10  C₂₀

C₁₀  L₁₀  C_K  VE

S_L  C_F  E_L  LK  G

PFN1  R_K  E_L  Rᵥ₁₀

B

FIG 13

$L_{20} < L_{10}$

VE

A*  L₂₀  C_F  HS11  C₂₀

L₁₀  C_K  E_L  LK  G

S_L  R_K  E_L  Rᵥ₁₀

PFN2

B

$L_{20} \cdot C_{20} < L_{10} \dfrac{C_F \cdot C_K}{C_F + C_K}$

FIG 14

$L_{20} < L_{10}$

VE

A*  L₂₀  C_F  HS12  C₂₀

C₁₀  L₁₀  C_K  E_L  LK  g  G

S_L  R_K  E_L  g  Rᵥ₁₀

PFN2

B

$L_{20} \cdot C_{10} < L_{10} \dfrac{C_F \cdot C_K}{C_F + C_K}$

FIG 15

Anschluß bei A

VE – Zündeinsatz 1µs bis 10µs
nach Schließen von Sp

Anschluß bei A*

VE – Zündeinsatz
500 ns bis 1µs nach $t_A$

1µs bis 10µs
Zeitintervall zwischen
t = 0 und t = $t_L$

Anschluß
bei A'

VE – Zündeinsatz 20 ns
bis 300 ns
nach $t_L$

1  2  3  4  5  6  7  8  9  10  11  12  13    t

t = 0
(Schließen Schalter Sp)

$t_L$
(Schließen
Schalter $S_L$)

$t_{GA}$
(Zeitpunkt des
Beginns der
Laser-Gasentladung)

FIG 16